# EUROPEAN PATENT APPLICATION

(11) **EP 4 663 461 A1**
(43) Date of publication of application: **17.12.2025**
(21) Application number: 24182334.3
(22) Date of filing: 14.06.2024
(51) Int. Cl.: B60L 5/00, B60L 5/38, B60L 5/40, B60L 5/42, B60L 53/30, B60M 1/34, B60M 1/36, B60L 53/68

(54) **SLOTTED ELEMENT AND SYSTEM COMPRISING SUCH A SLOTTED ELEMENT**

(71) Applicant: Evias AB, 116 74 Stockholm (SE)
(72) Inventor: Asplund, Gunnar, 171 60 Solna (SE)
(74) Representative: Groth & Co. KB

(57) **Abstract**

Slotted element (1) adapted to co-act with a current collector of an electrically propellable road vehicle for supplying electric power to said vehicle, said slotted element being adapted to be located on, or to be at least partly recessed in, a ground surface of a roadway or a parking lot. The slotted element comprises an elongated body portion with at least one slot (3a, 3b) extending in a longitudinal direction of the body portion/slotted element. One or more of the at least one slot is each provided with at least one electric conductor (4a) therein, the at least one electric conductor being adapted to be put under voltage for supplying the electric power, wherein the at least one electric conductor (4a) is connected to the body portion by means of two or more longitudinally spaced apart insulating elements (5a1, 5a2).

## Description

### TECHNICAL FIELD

The invention relates to a slotted element and a system comprising such a slotted element. The slotted element is adapted to co-act with a current collector of an electrically propellable road vehicle for supplying electric power to said vehicle.

### BACKGROUND

Concerns about the environmental impact of combustion of fossil fuels have led to an increased interest in electric vehicles, which have several potential benefits compared to vehicles with conventional internal combustion engines, including a significant reduction of urban air pollution and reduced greenhouse gas emissions.

Presently, electric vehicles are normally charged at stationary charging stations located at parking lots (public or at the home of the vehicle owner) or at rest stops along the highways. Although the latest-generation electric vehicles are provided with high-voltage fast charging technology, charging of the vehicles still takes significantly longer time compared to fuelling a vehicle with fossil fuels. The lengthy charging times also often cause queues at the charging stations during peak hours, thus adding even further to the overall time needed to charge the vehicles.

Furthermore, the expense, weight and limited capacity of the lithium-ion battery packs of today limit widespread use of electric power as the main source of power in heavy vehicles (long haulage trucks and mining vehicles in particular).

WO 2011/123049 proposes complementing the battery of the electric vehicle with electric feeding of the vehicle while driving. A system is disclosed for electric propulsion of a vehicle along a road comprising rail elements/structures having grooves provided with electric conductors therein that may be put under voltage and located in longitudinal tracks or channels in the road. The vehicle is equipped with a current collector which during contact with the electric conductors allows for transfer of electric power between the electric conductors and the vehicle to propel the vehicle and charge its battery set. The stretch of road carrying the rail elements is divided into electrically separated road sections oriented in series, whereby the rail elements are only put under voltage when a vehicle with its current collector passes the relevant road section.

WO 2021/051233 discloses a system comprising a stationary charging arrangement comprising a rail arranged in or on a parking lot and at least one additional rail arranged consecutively along a roadway, the rails having electric conductors therein connected to respective vehicle-external power sources and having corresponding cross sections such that an electrically propellable vehicle via its current collector can be supplied with electric power at the parking lot as well as while driving along the roadway

Using in/on road rails or slotted elements for stationary charging may result in electric safety issues, however.

One problem is that the vehicle body may be subjected to live voltage if an isolation error would occur. WO 2021/052948 proposes to solve this problem by providing the rail/slotted element with at least one ground conductor extending along the lengthwise direction of the rail. The ground conductor(s) co-act with ground contact element(s) of the current collector which is electrically connected to a chassis and/or body portion of the vehicle. Since the vehicle is grounded, any isolation error cannot result in the vehicle body or chassis being subjected to live voltage.

The ground conductors proposed in WO 2021/052948 grounds the rail/slotted element. A problem is that the impedance to ground (impedance between the electric conductors and ground conductors) may be insufficient, in particular during wet/moist conditions. Stationary charging standards such as CCS2 require very high impedance to ground. Thus, there is a need for an improved rail/slotted element.

### SUMMARY

An object of the invention is to provide an improved slotted element (and a system comprising such a slotted element) which solves or at least improves on the problems described above.

These and other objects are achieved by the present invention by means of a slotted element according to the independent claim.

According to a first aspect of the invention, there is provided a slotted element adapted to co-act with a current collector of an electrically propellable road vehicle for supplying electric power to said vehicle, said slotted element being adapted to be located on, or to be at least partly recessed in, a ground surface of a roadway or a parking lot. The slotted element comprises an elongated body portion with at least one slot extending in a longitudinal direction of the body portion/slotted element. One or more of the at least one slot is each provided with at least one electric conductor therein, the at least one electric conductor being adapted to be put under voltage for supplying the electric power, wherein the at least one electric conductor is connected to the body portion by means of two or more longitudinally spaced apart insulating elements.

In other words, the slotted element comprises grooves/slots (in its body portion) extending in the longitudinal direction of the slotted element, wherein at least one, or each, of the grooves/slots is each provided with a respective at least one electric conductor therein. The slotted element may be described as elongated, i.e. substantially longer than wide/high. At least one, or each, of the electric conductor(s) is each connected to the body portion by means of two or more longitudinally spaced apart insulating elements which electrically insulate the electric conductors from the body portion., The insulating elements are longitudinally spaced apart in the sense that the electric conductor(s) is/are not connected to the slotted element along their whole length(s). On the contrary, the connection via two or more longitudinally spaced apart insulating elements for each electric conductor implies that the electric conductor is connected to the body portion at two or more separate/distinct longitudinal positions. This may also be described in that at least two insulating elements being spaced apart in the longitudinal direction are sandwiched between an electric conductor and the body portion (such as to electrically insulate the electric conductor from the body portion). The insulating elements may be described as having short longitudinal lengths in relation to the longitudinal length of the electric conductor. For example, the combined longitudinal length of the insulating elements may be less than 10% or less than 5% of the longitudinal length of the electric conductor. Since the insulting elements are short in length, the electric conductor(s) are, along most of its/their length(s), insulated from the body portion by air. The electric conductor(s) may consequently be described as substantially air insulated.

The invention is based on the insight that the decrease in impedance to ground during wet/moist conditions is related to water aggregating/sticking to the insulation between the electric conductor(s) and the body portion of the slotted element. The invention is further based on the insight that by using air as insulator, this effect can be reduced and impedance to ground can be raised. The invention is furthermore based on the insight that the short longitudinal length of the slotted elements needed for stationary charging means that air insulation of the conductor(s) can be substantially achieved by using longitudinally spaced apart insulating elements which are short compared to the electric conductor, for example one insulating element at each longitudinal end of the electric conductor. It is understood that although the slotted element according to the invention is mostly described with reference to stationary charging, it is also usable for dynamic/on road charging or powering of the vehicle while travelling along a roadway. In such applications, a plurality of insulating elements would be necessary though due to the typically quite long length of such rails/slotted elements.

In embodiments, at least one, or each, of the slots provided with at least one longitudinally extending electric conductor therein is provided with at least two longitudinally spaced apart roof portions covering part of the slot such that the slot opening has a shorter longitudinal length than the slot, wherein said two or more longitudinally spaced apart insulating elements are arranged in the slot beneath a respective roof portion. It is understood that slot opening refers to the opening to the exterior of the slotted element through which access to the electric conductors is possible. The roof portions may cover opposite longitudinal end portions of the slot opening. It is also understood that the term roof portion refers to the typical alignment of the slotted element with the slot openings of the slots/grooves facing substantially vertically upwards, i.e. in substantially a normal direction relative the parking lot or roadway ground surface, which means that the roof portions form "roofs" acting as "rain shields". If for example the slotted element is oriented sideways with the slot openings facing laterally, the roof portions will be aligned substantially vertical, thus forming "walls". The roof portions may be separate parts which are arranged to cover part of the slot opening. Alternatively, the roof portions may be parts of the body portion of the slotted element, i.e. that the body portion of the slotted element has an interior space with a greater longitudinal length than the slot opening.

In embodiments, the at least one electric conductor may be connected to the body portion of the slotted element via insulating elements at opposite ends of the slot and/or at opposite ends of the respective electric conductor. Preferably, the at least one electric conductor has a greater length than the slot opening and is connected to the body portion at opposite ends of the electric conductor. These embodiments are advantageously combined with the above-described embodiment comprising roof portions.

In embodiments, one or more, or each, slot has a longitudinal length being shorter than the longitudinal extension of the slotted element. In such embodiments, the at least one electric conductor is advantageously connected to the body portion via insulating elements at opposite ends of the slot The at least one electric conductor may have a greater length than the slot such that it extends into interior spaces of the body portion at opposite ends of the electric conductor, where the at least one electric conductor is connected to the body portion via insulating elements arranged beneath roof portions formed by the body portion.

In embodiments, the slotted element further comprises heating means arranged to heat at least one, or each, of the longitudinally spaced apart insulating elements. The heating means allows any moisture adhering to the insulating elements to be at least partly removed by heating to about 100 degrees C. Thereby, the impedance to ground can be further increased. In particularly advantageous embodiments, this embodiment is combined with the embodiments above in that the slotted element is provided with roof portions as described above, and the electric conductor is connected to the body portion with insulating elements arranged beneath the roof portions and at opposite ends of the electric conductor. Since the insulating elements are arranged beneath the roof portions, they are protected from rain, and any moisture adhering thereto can be easily removed by the heating means.

In embodiments, the slotted element further comprises at least one protective covering element arranged to cover a respective slot opening of at least one of the slots, said covering element(s) being displaceable in a lateral direction being substantially perpendicular to the longitudinal direction between a closed position in which the coverings elements cover said respective slot opening in the sense that access to the electric conductor(s) therein is prevented and an open position in which access to the electric conductor(s) is provided. The protective covering elements may be resiliently pre-loaded (by springs for example) towards the closed position. The protective covering elements may be arranged to be displaced towards the open position by means of a current collector being displaced into the slot(s) making contact with the covering elements and overcoming the pre-loading force. Alternatively, the protective covering elements may laterally displaceable by means of actuating means.

In embodiments, the slotted element further comprises at least one, or at least two, data conductors for transferring data to and from a charging device, and at least one ground conductor for connection to ground. The at least one ground conductor may extend in the longitudinal direction of the slotted element The data conductors do not necessarily need to extend longitudinally nor along the (full) length of the slotted element The data conductors may for example be connected to/configured to form CP and PP contacts according to the CCS/CCS2 standards. The ground conductor(s) and/or data conductor(s) may be arranged in, or adjacent to, one or more of the at least one slot

According to a second aspect of the invention, there is provided a system for electrically feeding an electrically propellable road vehicle. The system comprises a stationary charging arrangement, an on-road charging arrangement and a current collector connectable to an electrically propellable vehicle. The stationary charging arrangement comprises at least one slotted element according to first aspect of the invention or embodiments thereof, the slotted element(s) being located in or on a parking lot on which the vehicle is adapted to be parked, the at least one electric conductor of the respective slotted element being connected to charging device(s). The on-road charging arrangement comprises at least one additional slotted element, said at least one additional slotted element being arranged consecutively along a roadway and being connectable to one or more vehicle-external power sources to supply the vehicle with electric power while driving on said roadway, wherein said at least one additional slotted element comprises at least one slot extending in a longitudinal direction of the slotted element, wherein one or more (or each) of said at least one slot is each provided with at least one electric conductor, wherein the at least one slot and the at least one electric conductor are positioned in relation to the additional slotted element(s) in a corresponding manner as in the at least one slotted element of the stationary charging arrangement, i.e. the slotted element(s) and the additional slotted element(s) have corresponding cross sections. The current collector is connectable to an electrically propellable vehicle in a vertically and laterally displaceable manner to selectively connect at least one contact element thereof mechanically and electrically with at least one electric conductor of said slotted element or with at least one electric conductor of said additional slotted element.

In embodiments, the system comprises said electrically propellable vehicle, wherein said current collector is connectable to the electrically propellable vehicle in said vertically and laterally displaceable manner.

In embodiments of the system, the slotted element comprises data conductor(s) for transferring data to and from a charging device, and at least one ground conductor for connection to ground. The at least one ground conductor extends in the longitudinal direction of the slotted element The data conductor is connected to a data connector of said charging device. The additional slotted element further comprises at least one ground conductor extending in the longitudinal direction of the additional slotted element and being positioned in relation to the additional slotted element in a corresponding manner as in the slotted element of the stationary charging arrangement. The current collector comprises at least one ground contact element for connecting with the ground conductor of the slotted element and with the ground conductors of the at least one additional slotted element. The current collector further comprises at least one data contact element for connecting with the data conductor of the slotted element

In embodiments, the system further comprises heating means to heat the at least one contact element and/or the at least one ground contact element and/or the at least one data contact element Preferably, all of the contact elements are heated.

The features of the embodiments described above are combinable in any practically realizable way to form embodiments having combinations of these features.

### BRIEF DESCRIPTION OF THE DRAWINGS

Above discussed and other aspects of the present invention will now be described in more detail using the appended drawings, which show presently preferred embodiments of the invention, wherein:
fig. 1 shows a top view of an embodiment of the slotted element according to the first aspect of the invention;
fig. 2 shows a cross-section view of the embodiment in fig. 1, the cross-section being taken along a vertical plane A-A being parallel to the longitudinal direction of the slotted element;
fig. 3a shows a cross-section view of the embodiment in fig. 1, the cross-section being taken along a vertical plane B-B being perpendicular to the longitudinal direction of the slotted element;
fig. 3b shows a cross-section view of the embodiment in fig. 1, the cross-section being taken along a vertical plane C-C being perpendicular to the longitudinal direction of the slotted element;
fig. 4 shows a cross-section view of another embodiment of the slotted element according to the first aspect of the invention;
fig. 5a-b show cross-section views of an embodiment of the system according to the second aspect of the invention, and
fig. 6 shows a cross-section view of the current collector and the slotted element in fig. 5a, the cross-section being taken along a vertical plane being parallel to the longitudinal direction of the slotted element

### DETAILED DESCRIPTION

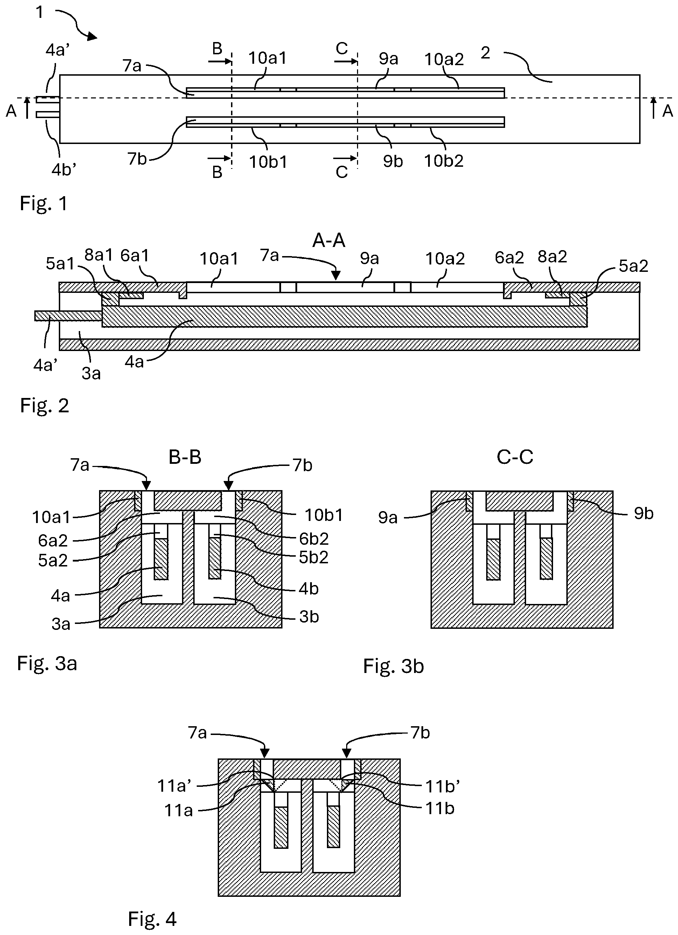

Figures 1, 2 and 3a-b schematically illustrate an embodiment of the slotted element according to the first aspect of the invention. In fig. 1, a top view is shown. Fig. 2 shows a cross-section view, the cross-section being taken along a vertical plane A-A being parallel to the longitudinal direction of the slotted element Fig. 3a-b show two different cross-section views, the cross-sections being taken along vertical planes B-B and C-C.

The slotted element 1 comprises an elongated body portion 2 with two parallel slots 3a, 3b extending in a longitudinal direction of the slotted element/body portion. The slots 3a, 3b are provided with a respective electric conductor 4a, 4b therein. The electric conductors are adapted to be put under voltage by means of connecting cables 4a', 4b' for supplying said electric power. The slotted element 1 is adapted to co-act with a current collector of an electrically propellable road vehicle for supplying electric power to the vehicle in the sense that contact elements of the current collector may be displaced downwardly into slots 3a, 3b to make contact with the electric conductors.

The slots 3a, 3b are provided with at least two longitudinally spaced apart roof portions 6a1/6a2, 6b2 covering part of the slots 3a, 3b such that slot openings 7a, 7b are formed which have a longitudinal length being shorter than the longitudinal extension of the slots and of the slotted element 1.

The electric conductors 4a, 4b are each connected to the body portion 2 by means of two longitudinally spaced apart (electrically) insulating elements (5a1, 5a2 for conductor 4a, 5b2 and other insulating element not shown in the figures for conductor 4b) at opposite ends of the respective electric conductor 4a, 4b. The insulating elements 5a1, 5a2, 6b2 are arranged beneath a respective roof portion 6a1, 6a2, 6b2.

The slotted element is adapted to be located on, or to be at least partly recessed in, a ground surface of a roadway or a parking lot such that the slot openings 7a, 7b face substantially vertically/upwardly and such that the roof portions 6a1, 6a2, 6b2 protect the respective insulating elements from direct rain.

As can be seen in fig. 2, heating means in the form of conductive heating elements 8a1, 8a2 are arranged adjacent respective insulating elements 5a1, 5a2. The other conductor 4b is provided with corresponding heating elements.

The slotted element further comprises two data conductors 9a, 9b for transferring data to and from a charging device, and four ground conductors 10a1, 10a2, 10b1, 10b2 for connection to ground (see figures 2, 3a, 3b). The data and ground conductors may be described as elongated and extending in the longitudinal direction of the slotted element. The data and ground conductors are arranged immediately adjacent the slot openings 7a, 7b at a top of the slotted element The data and ground conductors are arranged consecutively with a data conductor arranged between two ground conductors as seen in the longitudinal direction. The data conductor is separated from the ground conductors by insulating members.

The slot openings 7a, 7b have a width of less than 12 mm and the electric conductors 4a, 4b are disposed in the respective slot at least 30 mm below the upper end of the slot (to conform with the IP20 standard).

Fig. 4 shows a cross-section view of another embodiment of the slotted element according to the first aspect of the invention. The slotted element corresponds to the embodiment in fig. 1, 2, 3a-b except in that it further comprises protective covering elements 11a, 11b arranged to protect/prevent access to the electric conductors 4a, 4b by covering a respective slot opening 7a, 7b. The covering elements are displaceable in a lateral direction being substantially perpendicular to the longitudinal direction between a closed position (the position shown in fig. 4) in which the coverings elements cover said respective slot opening and an open position (shown with dotted lines in fig. 4) in which access to the slots is provided. In fig. 4, the covering elements are schematically illustrated as elements having substantially triangular cross-section and being pivotable around a respective rotational axis 11 a', 11b'. The covering elements are resiliently pre-loaded towards the closed position by means of (not shown) spring members.

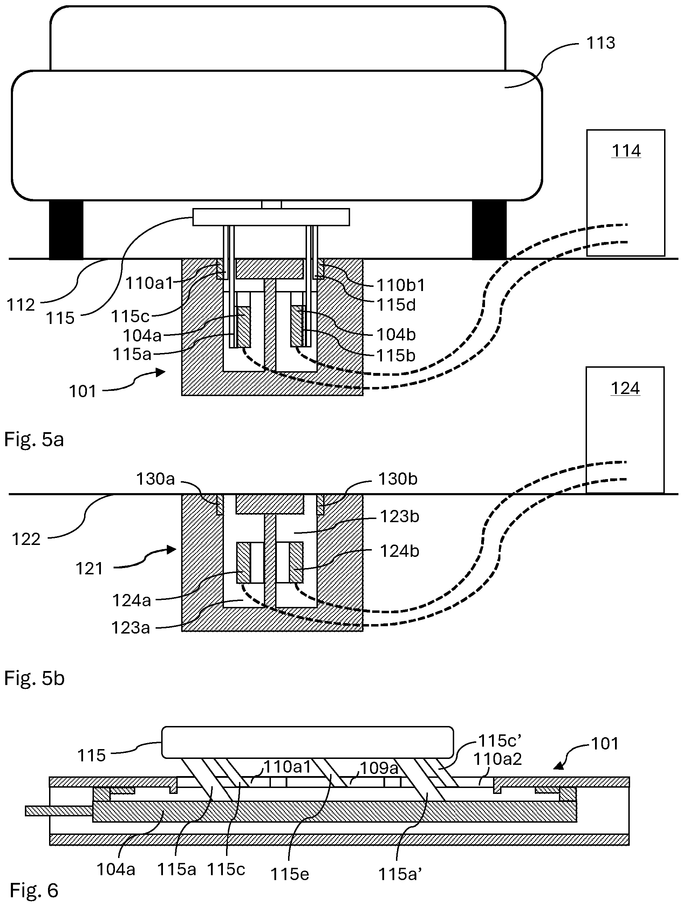

Figures 5a-b and 6 schematically illustrate an embodiment of the system according to the second aspect of the invention. In fig. 5a, a cross-section view is shown which is taken along a vertical plane being perpendicular to the longitudinal direction of the slotted element. In fig. 5b, a cross-section view is shown which is taken along a vertical plane being perpendicular to the longitudinal direction of an additional slotted element In fig. 6, only the current collector and the slotted element of the embodiment in fig. 5a are shown in a cross-section view taken along a vertical plane being parallel to the longitudinal direction of the slotted element

The system comprises a stationary charging arrangement comprising a slotted element 101. The slotted element is the same as the embodiment in fig. 1, 2, 3a-b and the description above relating thereto applies also to the slotted element 101. Reference 104a-b and 110a1-b1 correspond to 4a-b and 10a1-b1 in fig. 3a. The conductors 104a-b and 110a1-b1 of the slotted element are connected to a charging device 114 operating according to the CCS2 standard.

The slotted element 101 is recessed in the ground surface of a parking lot 112 such that an upper surface of the slotted element is flush with the ground surface.

The system furthermore comprises an on-road charging arrangement comprising a plurality of additional slotted elements arranged consecutively along a roadway 122 and being connected to vehicle-external power sources to supply the vehicle 113 with electric power while driving on said roadway, where one additional slotted element 121 connected to a vehicle-external power source 124 is seen in cross-section in fig. 5b.

The vehicle-external power source(s) may (as described in WO 2024/052334, hereby incorporated by reference) be vehicle-external charging device(s) configured to, in response to a charge signal received from on-vehicle control means, order one or more of the at least one vehicle external charging devices to provide a current to the thereto connected slotted element corresponding to the desired charging current.

The additional slotted element 121 comprises two parallel slots 123a, 123b extending in a longitudinal direction of the slotted element, each slot being provided with an electric conductor 124a, 124b and a ground conductor 130a, 130b. The slots 123a-b and the electric conductors 124a-b are dimensioned and positioned in relation to the body portion of the additional slotted element 121 in a corresponding manner as in the slotted element 101 of the stationary charging arrangement, for example in the sense that:
- the slots 123a-b have corresponding width and spacing as in slotted element 101, and
- electric conductors 124a-b are positioned relative the slots in a corresponding manner as the electric conductors 104a-b in slotted element 101.

The ground conductors 130a-b in the additional slotted element 121 differ from the ground conductors 110a1-b1 of the slotted element in fig. 5a in that ground conductors 130a-b extend along the full length of the additional slotted elements rather than being spaced apart by data conductors as in fig. 5a. The ground conductors 130a-b are however, as seen in cross section, positioned in relation to the slots 123a-b in a corresponding manner as ground conductors 110a1-b1 such that the same current collector can be used.

The electric conductors of the additional slotted elements are connected to the body portion of the additional slotted element by electrically insulating elements sandwiched between the electric conductor and a respective slot wall (see fig. 5b), preferably extending along the longitudinal length of the electric conductor to achieve a stable connection between the electric conductors and the body portion (which is important with longer slotted elements/conductors). The electric conductors 124a-b are thus not mainly air insulated as conductors 140a-b in the slotted element 101.

The system further comprises an electrically propellable vehicle 113 comprising a current collector 115, which in fig. 5a is shown as parked on the parking lot above the slotted element. The current collector (or more specifically its current collector arms/contact elements) is vertically and laterally displaceable manner to displace contact elements 115a-d into the slots of the slotted element 101 or an additional slotted element (such as 121). In fig. 5a, the contact elements 115a-d connect mechanically and electrically with the conductors 104a-b, 110a1-b1. Due to the corresponding slot and conductor configuration of the additional slotted elements, the current collector 115 can alternatively connect with the additional slotted elements to charge/power the vehicle while driving along roadway 122.

As can be seen in fig. 6, the current collector 115 also comprises a data contact element 115e making contact with data conductor 109a (and a corresponding data contact element co-acting with the data conductor in the other slot). The data conductors are connected (not illustrated in the figures) to the charging device 114. Further as can be seen in fig. 6, the current collector 115 comprises two ground contact elements 115c, 115c' (and corresponding ground contact elements co-acting with the ground conductors in the other slot).

The additional slotted elements do not comprise any data conductors which means that the data contact elements (115e for example) of the current collector are not used while driving on the roadway.

The description above and the appended drawings are to be considered as non-limiting examples of the invention. The person skilled in the art realizes that several changes and modifications may be made within the scope of the invention. For example, the number of electric conductors, data conductors and ground conductors may be varied within the scope of the claims. Furthermore, the number of insulating elements per electric conductor may be varied.

## Claims

1. A slotted element (1) adapted to co-act with a current collector of an electrically propellable road vehicle for supplying electric power to said vehicle, said slotted element being adapted to be located on, or to be at least partly recessed in, a ground surface of a roadway or a parking lot,
said slotted element (1) comprising an elongated body portion (2) with at least one slot (3a, 3b) extending in a longitudinal direction of the slotted element, wherein one or more of said at least one slot (3a, 3b) is each provided with at least one electric conductor (4a, 4b) therein, the at least one electric conductor being adapted to be put under voltage for supplying said electric power, wherein the at least one electric conductor (4a, 4b) is connected to the body portion (2) by means of two or more longitudinally spaced apart insulating elements (5a1, 5a2, 5b2).

2. Slotted element according to claim 1, wherein at least one of the slots (4a, 4b) being provided with at least one longitudinally extending electric conductor (5a, 5b) therein is provided with at least two longitudinally spaced apart roof portions (6a1, 6a2, 6b2) covering part of the slot such that a slot opening (7a, 7b) to the exterior of the slotted element has a shorter length than the slot, wherein said two or more longitudinally spaced apart insulating elements (5a1, 5a2, 6b2) are arranged beneath a respective roof portion (6a1, 6a2, 6b2).

3. Slotted element according to claim 1 or 2, wherein said at least one slot (3a, 3b) has a longitudinal length being shorter than the longitudinal extension of the slotted element (1).

4. Slotted element according to any of the preceding claims, wherein said at least one electric conductor (4a, 4b) is connected to the body portion (2) via insulating elements (5a1, 5a2, 6b2) at opposite ends of the electric conductor.

5. Slotted element according to claim any of the preceding claims, further comprising heating means (8a1, 8a2) arranged to heat at least one of the longitudinally spaced apart insulating elements (5a1, 5a2).

6. Slotted element according to any of the preceding claims, further comprising protective covering elements (11a, 11b) arranged to cover a respective slot (3a, 3b) or slot opening (7a, 7b) formed by the at least one of the slots (3a, 3b), said covering elements being displaceable in a lateral direction being substantially perpendicular to the longitudinal direction between a closed position in which the coverings elements cover said respective opening and an open position in which access to the slots is provided.

7. Slotted element according to claim 6, wherein said protective covering elements (11a, 11b) are resiliently pre-loaded towards the closed position.

8. Slotted element according to claim 6, wherein said protective covering elements (11a, 11b) are laterally displaceable by means of actuating means.

9. Slotted element according to according to any of the preceding claims, further comprising at least one data conductor (9a, 9b) for transferring data to and from a charging device, and at least one ground conductor (10a1, 10a2, 10b1, 10b2) for connection to ground, the at least one ground conductor extending in the longitudinal direction of the slotted element

10. Slotted element according to any of the preceding claims, wherein a respective slot opening (7a, 7b) to the exterior of the slotted element of said at least one slot (3a, 3b) has a width of less than 12 mm and said at least one conductor (4a, 4b) being disposed in the at least one slot at least 30 mm below an upper end of the slot to conform with the IP20 standard.

11. System for electrically feeding an electrically propellable road vehicle, the system comprising:
- a stationary charging arrangement comprising a slotted element (101) according to any of the preceding claims, the slotted element being located in or on a ground surface of a parking lot (112) on which the vehicle (113) is adapted to be parked, the at least one electric conductor (104a, 104b) of the slotted element being connected to a charging device (114),
- an on-road charging arrangement comprising at least one additional slotted element (121), said at least one additional slotted element being arranged consecutively along a roadway (122) and being connected to one or more vehicle-external power sources (124) to supply the vehicle (113) with electric power while driving on said roadway, wherein said at least one additional slotted element (121) comprises at least one slot (123a, 123b) extending in a longitudinal direction of the slotted element, wherein one or more of said at least one slot is each provided with at least one electric conductor (124a, 124b), wherein the at least one slot and the at least one electric conductor are positioned in relation to the additional slotted element (121) in a corresponding manner as in the slotted element (101) of the stationary charging arrangement, and
- a current collector (115) connectable to an electrically propellable vehicle (113) in a vertically and laterally displaceable manner to selectively connect at least one contact element (115a, 115b) thereof mechanically and electrically with at least one electric conductor (104a, 104b) of said slotted element or with at least one electric conductor (124a, 124b) of said additional slotted element (121).

12. System according to claim 11, wherein said slotted element (101) is a slotted element (1) according to claim 9, wherein the data conductor (109a) is connected to a data connector of said charging device (114), and wherein said additional slotted element (121) further comprises at least one ground conductor (130a, 130b) extending in the longitudinal direction of the additional slotted element and being positioned in relation to the additional slotted element in a corresponding manner as in the slotted element of the stationary charging arrangement, wherein said current collector (115) comprises at least one ground contact element (115c, 115d) for connecting with the at least one ground conductor (110a1, 110b1) of the slotted element and with the at least one ground conductor (130a, 130b) of the at least one additional slotted element (121), and wherein said current collector comprises at least one data contact element (115e) for connecting with the data conductor (109a) of the slotted element

13. System according to claim 12, further comprising heating means to heat the at least one contact element (115a, 115a', 115b) and/or the at least one ground contact element (115c, 115d) and/or the at least one data contact element (115e).
